# EUROPEAN PATENT APPLICATION

(11) **EP 4 672 415 A1**
(43) Date of publication of application: **31.12.2025**
(21) Application number: 24886092.6
(22) Date of filing: 18.10.2024
(51) Int. Cl.: H01M 10/0569, H01M 10/0525, H01M 4/525, H01M 4/505, H01M 4/38

(54) **ELECTROLYTE FOR LITHIUM SECONDARY BATTERY, AND LITHIUM SECONDARY BATTERY COMPRISING SAME**

(30) Priority: 01.11.2023 KR 20230148871; 15.10.2024 KR 20240140522
(71) Applicant: LG Energy Solution, Ltd., Seoul 07335 (KR); Korea Advanced Institute of Science and Technology, Daejeon 34141 (KR)
(72) Inventor: BYON, Hye Ryung, Daejeon 34141 (KR); CHO, Seon Yeong, Daejeon 34141 (KR); JANG, Taegyu, Daejeon 34141 (KR)
(74) Representative: Hoffmann Eitle
(86) International application number: PCT/KR2024/015930
(87) International publication number: WO 2025/095417

(57) **Abstract**

The present disclosure relates to an electrolyte for lithium secondary battery that can improve the ion conductivity and lifetime characteristics of lithium secondary batteries, and a lithium secondary battery comprising the same.

## Description

### [TECHNICAL FIELD]

### Cross-Reference to Related Application(s)

This application claims priority to and the benefit of Korean Patent Application No. 10-2023-0148871, filed on November 1, 2023, and Korean Patent Application No. 10-2024-0140522, filed on October 15, 2024, with the Korean Intellectual Property Office, the disclosures of which are incorporated herein by reference in their entirety.

The present disclosure relates to an electrolyte for lithium secondary battery that can improve the ion conductivity and lifetime characteristics of lithium secondary batteries, and a lithium secondary battery comprising the same.

### [BACKGROUND]

Lithium metal battery, which uses lithium metal as an anode, has been attracting attention as a next generation battery that overcomes the low capacity of existing lithium-ion batteries. However, the ether-based electrolyte used currently have low oxidation stability, which limits their cathode stability. Therefore, 2,2,3,3-tetrafluoro-1,4-dimethoxybutane(FDMB), which has high oxidation stability, has been studied as an electrolyte material. However, FDMB also has a limitation in that the ionic conductivity is low due to its high viscosity. Therefore, there is a need to develop an electrolyte that secures both ionic conductivity and oxidation stability through a combination of different solvents, etc.

Meanwhile, in recent years, interest in the so-called localized high concentration electrolyte(LHCE) comprising an organic non-solvent that exhibits relatively low solubility in lithium salts in the electrolyte has increased significantly in order to improve the ion conductivity and charge/discharge speed of lithium secondary batteries such as lithium metal batteries.

As the SEI layer contains more anion-derived components of lithium salts, it forms the more stable film quality by decomposition. However, when an organic non-solvent is used in the electrolyte, the organic non-solvent does not participate in the solvation structure of Li ions, and many anions participate, thus forming a large amount of anion-derived SEI.

However, in the case of 1,1,2,2-tetrafluoroethyl-2,2,3,3-tetrafluoropropyl ether(TTE), which is most commonly used as the organic non-solvent, it does not participate in the solvation structure and thus many anions are included in the SEI, but the ion conductivity is low due to high viscosity.

Therefore, there is a continuous demand for developing electrolytes that can improve the ionic conductivity and lifetime characteristics of lithium secondary batteries, for example, lithium metal secondary batteries to which the LHCE is applied.

### [DETAILED DESCRIPTION OF THE INVENTION]

### [Technical Problem]

It is an object of the present disclosure to provide an electrolyte for lithium secondary battery that can improve the ion conductivity and lifetime characteristics of lithium secondary batteries, and a lithium secondary battery comprising the same.

### [Technical Solution]

Provided herein is an electrolyte for lithium secondary battery comprising:
a lithium salt;
a non-aqueous organic solvent comprising a fluorine-substituted ether-based solvent; and
an organic non-solvent exhibiting a solubility of the lithium salt that is at least 10 times lower than that of the non-aqueous organic solvent,
wherein the organic non-solvent comprises a compound represented by the following Chemical Formula 1: 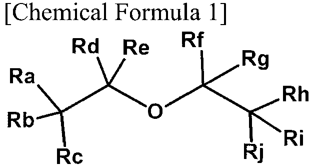 wherein in Chemical Formula 1,
   Ra to Rj are the same or different from each other, and each independently represent hydrogen or a fluoro group, and at least five of the Ra to Rj are fluoro groups.

Also provided herein is a lithium secondary battery comprising: a cathode containing a cathode active material; an anode; a separator between the cathode and the anode; and an electrolyte of the present disclosure.

In such a lithium secondary battery, the anode may be in the form of a lithium metal secondary battery comprising a lithium metal layer.

### [Advantageous Effects]

The electrolyte of the present disclosure includes a fluorine-substituted ether-based solvent such as FDMB as a non-aqueous organic solvent, and a compound represented by Chemical Formula 1 as an organic non-solvent. It has been confirmed that by combining the non-aqueous organic solvent and the organic non-solvent, it is possible to reduce the viscosity and improve the ionic conductivity in an LHCE-based electrolyte. This is predicted to be because the compound represented by Chemical Formula 1 can participate in the solvation process of a lithium salt, unlike TTE, which is a typical organic non-solvent.

In addition, it has been confirmed that the electrolyte exhibits excellent oxidation stability, and due to this oxidation stability, the use of the electrolyte in a lithium secondary battery, for example, a lithium metal secondary battery, can improve the lifetime characteristics and cathode stability of the battery, and can induce effective formation of SEI and CEI to improve battery performance.

### [BRIEF DESCRIPTION OF THE DRAWING]

FIG. 1 shows the results of NMR analysis of changes in chemical species in the electrolyte to analyze the solvation structure of the electrolytes of Example and Comparative Example, and a schematic diagram of the solvation structure predicted from the results.
FIGS. 2 and 3 show the results of evaluating the lifetime characteristics of the lithium symmetric cells containing the electrolytes of Example and Comparative Example under application of different current densities.
FIG. 4 shows the results of measuring the resistance of the SEI film with the passage of time for the lithium symmetric cells containing the electrolytes of Example and Comparative Example.
FIG. 5 shows the results of measuring the amount of inactivated lithium for the lithium symmetric cells containing the electrolytes of Example and Comparative Example.
FIG. 6 shows the results of evaluating the resistance of the SEI film by cycle for the lithium symmetric cells containing the electrolytes of Example and Comparative Example.
FIG. 7 shows the results of electron microscopic analysis of the SEI film formed after 50 cycles for the lithium symmetric cells containing the electrolytes of Example and Comparative Example, and FIG. 8 shows the thickness of the SEI film measured from the results.
FIG. 9 shows the results of component analysis of SEI films formed after 50 cycles for the lithium symmetric cells containing the electrolytes of Example and Comparative Example.
FIG. 10 shows the results of evaluating the oxidation stability of each electrolyte using evaluation cells containing the electrolytes of Example and Comparative Example.
FIG. 11a ~ 11c show the results of evaluating the cycle characteristics of full cells containing the electrolytes of Example and Comparative Example.
FIG. 12 shows the results of electron microscopic analysis of cracks occurred in cathode particles after 20 cycles for full cells containing the electrolytes of Example and Comparative Example.
FIG. 13 shows the thickness measured from the electron microscope analysis of the CEI films formed after 20 cycles for full cells containing the electrolytes of Example and Comparative Example.
FIG. 14 shows the results of evaluating the cycle characteristics of pouch cells containing the electrolytes of Example and Comparative Example.
FIG.15 shows the results of evaluating the cycle characteristics of full cells containing the electrolytes and LFP cathode materials of Example and Comparative Example.

### [DETAILED DESCRIPTION OF THE EMBODIMENTS]

Hereinafter, an electrolyte for lithium secondary battery and a lithium secondary battery comprising the same according to specific embodiments of the present disclosure will be described.

Terms or words used in the present specification and claims should not be construed as being limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

The terms used herein are provided to describe exemplary embodiments but are not intended to limit the inventive concept. The singular forms include plural forms unless the context clearly indicates otherwise.

As used herein, the term "fluoro group" means -F.

It should be understood that the terms "comprise," "include", "have", etc. are used herein to specify the presence of stated features, integers, steps, components or combinations thereof, but do not preclude the presence or addition of one or more other features, integers, steps, components, or combinations thereof.

According to an embodiment of the present disclosure, there is provided an electrolyte for lithium secondary battery comprising:
a lithium salt;
a non-aqueous organic solvent comprising a fluorine-substituted ether-based solvent; and
an organic non-solvent exhibiting a solubility of the lithium salt that is at least 10 times lower than that of the non-aqueous organic solvent,
wherein the organic non-solvent comprises a compound represented by the following Chemical Formula 1: 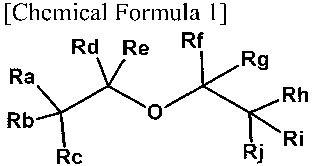 wherein in Chemical Formula 1,
   Ra to Rj are the same or different from each other, and each independently represent hydrogen or a fluoro group, and at least five of the Ra to Rj are fluoro groups.

The electrolyte of an embodiment may fall into the category of localized high-concentration electrolytes(LHCE), and can exhibit a high-concentration region in which the lithium salt is dissolved in the non-aqueous organic solvent at a high concentration during charging and discharging of the battery, and a form in which the organic non-solvent is distributed around such a high-concentration region. Therefore, when the electrolyte is used, the output characteristics of the battery may be improved due to the high-concentration distribution of the lithium salt. Further, depending on the organic non-solvent distribution region, it is possible to suppress the side reaction between the lithium metal layer and the electrolyte and improve the lifetime characteristics of the lithium secondary battery.

Meanwhile, in the electrolyte of an embodiment, the lithium salt is used as a medium for transferring ions within the lithium secondary battery. For example, the lithium salt contains Li⁺ as cation, and may together comprise an anion selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ and SCN⁻.

Specifically, the lithium salt may comprise at least one selected from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiFSI (Lithium bis(fluorosulfonyl) imide, LiN(SO₂F)₂), LiBETI (lithium bis(perfluoroethanesulfonyl) imide, LiN(SO₂CF₂CF₃)₂) and LiTFSI (lithium bis(trifluoromethanesulfonyl) imide, LiN(SO₂CF₃)₂), and taking into consideration the performance of the lithium secondary battery and the solubility in the non-aqueous organic solvent and organic non-solvent, LiFSI or LiTFSI may be appropriately used.

The lithium salt may be contained in the electrolyte at a concentration of 1.0M to 2.5M, or 1.0 to 2.0M, taking into consideration the performance of the lithium secondary battery. The concentration of the lithium salt can be defined as a molar concentration, taking into account the total volume of the non-aqueous organic solvent and the organic non-solvent. Due to the high concentration of the lithium salt, desolvation of lithium ions can be further accelerated, and the performance of a secondary battery can be further improved.

In addition, the fluorine-substituted ether-based solvent may comprise 2,2,3,3-tetrafluoro-1,4-dimethoxybutane(FDMB) or 2,2,3,3-tetrafluoro-1,4-diethoxybutane(FDEB), and in addition to the fluorine-substituted ether-based solvent, additional ether-based solvents and/or carbonate-based solvents may be further included in the non-aqueous organic solvent.

In addition to the fluorine-substituted ether-based solvent, the ether-based solvent that may be further included in the non-aqueous organic solvent may be an aliphatic ether-based solvent, and examples thereof comprise dimethyl ether, dibutyl ether, tetraglyme, diglyme, or dimethoxy ethane.

Furthermore, in addition to the fluorine-substituted ether-based solvent, carbonate-based solvents that may be further included in the non-aqueous organic solvent may be dimethyl carbonate, diethyl carbonate, dipropyl carbonate, ethylene carbonate, propylene carbonate, butylene carbonate, fluoroethylene carbonate, methyl propyl carbonate, ethyl methyl carbonate, ethyl propyl carbonate, methyl(2,2,2-trifluoroethyl)carbonate, or the like.

The electrolyte of one embodiment comprises a non-aqueous organic solvent that dissolves a lithium salt and acts as a migration path for lithium ions, as well as an organic non-solvent that exhibits a solubility for the lithium salt that is 10 times or more, or 10 to 30 times less than the non-aqueous organic solvent. and does not substantially dissolve the lithium salt. This organic non-solvent may be defined as one that does not substantially dissolve the lithium salt, and for example, can dissolve the lithium salt only at a concentration of 0.1 M or less, or 0 to 0.1 M, or 0 to 0.05 M.

The organic non-solvent comprises a compound represented by Chemical Formula 1. The compound represented by Chemical Formula 1 has a structure which is based on diethyl ether and is substituted with five or more fluoro groups. When the compound having the structure of Chemical Formula 1 is included in the organic non-solvent, it has the effects of reducing the viscosity of the electrolyte and improving the ion conductivity as compared to the most commonly used organic non-solvent, e.g., 1,1,2,2-tetrafluoroethyl-2,2,3,3-tetrafluoropropyl ether(TTE). Therefore, it is predicted that the TTE does not participate in the solvation structure of the lithium salt, but the compound of Chemical Formula 1 may participate in the solvation process of the lithium salt, unlike the TTE.

In Chemical Formula 1, the Ra to Rj each represent a substituent.

According to an embodiment of the present disclosure, five or six of Ra to Rj may be fluoro groups, and the rest may be hydrogen.

In addition, in Chemical Formula 1, five or six of Ra to Rc and Rh to Rj may be fluoro groups, and the remaining substituents of Ra to Rc and Rh to Rj that are not fluoro groups, and Rd to Rg may be hydrogen.

According to another embodiment of the present disclosure, the compound represented by Chemical Formula 1 may be bis(2,2,2-trifluoroethyl) ether (BTFE), and when the electrolyte of the present disclosure contains the compound of Chemical Formula 1, specifically BTFE, as an organic non-solvent, it has the effects of reducing the viscosity of the electrolyte and improving the ion conductivity.

The electrolyte of an embodiment further comprising the organic non-solvent together with the non-aqueous organic solvent may comprise a region where a high concentration of lithium salt is locally present in the non-aqueous organic solvent, as well as an organic non-solvent distribution region where the lithium salt is substantially absent. In this manner, since a locally high concentration of lithium salt is present in a solvated form in the electrolyte, the increase in electrolyte viscosity and the decrease in fluidity may be reduced by the organic non-solvent distribution region, while further improving the performance of the lithium secondary battery, such as output characteristics.

In the electrolyte of an embodiment, the amount of the organic non-solvent may be adjusted according to the types of the non-aqueous organic solvent and the lithium salt, or the overall concentration of the lithium salt, for example, the organic non-solvent: the non-aqueous organic solvent may be included in a volume ratio of 1:0.5 to 1:1.5, or 1:1.

According to an embodiment of the disclosure, the electrolyte may further comprise additives such as lithium nitrate(LiNO₃), lithium difluorooxalate phosphate(LiDFOP), lithium tetrafluoroborate(LiBF₄), lithium bis-oxalate borate(LiBOB), lithium difluorooxalate borate(LiDFOB), or fluoroethylene carbonate(FEC).

Meanwhile, according to another embodiment of the disclosure, a lithium secondary battery comprising the electrolyte of the above-mentioned embodiment is provided. The lithium secondary battery comprises a cathode containing a cathode active material; an anode; a separator between the cathode and the anode; and a lithium secondary battery comprising the electrolyte of an embodiment.

According to an embodiment, the anode may comprise a lithium metal layer to be in the form of a lithium metal secondary battery.

First, in the lithium secondary battery of another embodiment, the anode may be an electrode in which a lithium metal layer is formed on one surface or both surfaces of a planar anode current collector according to the general configuration of the lithium secondary battery, and may be produced by depositing lithium metal on the anode current collector or rolling lithium foil.

The anode current collector is a metal that has high conductivity without inducing chemical changes in the battery, and may be formed using any metal that has been previously known to be usable as an anode current collector.

Specific examples thereof comprise metals such as stainless steel, aluminum, nickel, titanium or copper, or copper, aluminum or stainless steel whose surface is treated with carbon, nickel, titanium, silver, or the like. This anode current collector can be formed in various forms such as a film, a sheet, a foil, a net, a porous body, a foaming body, or a non-woven fabric structure.

In addition, the anode current collector may have a thickness of 3 to 100 *µ*m, and the lithium metal layer may have a thickness of, for example, 1 to 300 *µ*m.

Meanwhile, the cathode may comprise a cathode current collector and a cathode active material layer located on the cathode current collector.

Such a cathode can be produced by mixing an active material and a binder, and optionally, a conductive material, a filler, or the like in a solvent to prepare a cathode slurry composition, and coating the slurry composition onto a cathode current collector.

The cathode current collector may generally have a thickness of 3 to 500 *µ*m. The cathode current collector is not particularly limited as long as it has high conductivity without causing any chemical changes in the battery, and for example, stainless steel, aluminum, nickel, titanium, fired carbon, or aluminum or stainless steel whose surface is treated with carbon, nickel, titanium, silver, or the like may be used. In addition, the current collector may have fine protrusions and depressions formed on a surface thereof to enhance adherence of a cathode active material, the current collector may be used in various forms such as a film, a sheet, a foil, a net, a porous body, a foaming body, and a non-woven fabric structure.

Further, the cathode active material may comprise lithium; and a lithium transition metal oxide comprising at least one transition metal selected from the group consisting of nickel, manganese, cobalt and iron.

Specifically, the lithium transition metal oxide may comprise lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{Z}O₄ (where 0<Z<2), etc.), lithium-nickel-cobalt-based oxide (e.g., LiNi_{1-Y1}Co_{Y1}O₂ (where 0<Y1<1, etc.), lithium-manganese-cobalt-based oxide (e.g., LiCo_{1-Y2}Mn_{Y2}O₂ (where 0<Y2<1), LiMn_{2-Z1}Co_{Z1}O₄ (where 0<Z1<2), etc.), lithium-nickel-manganese-cobalt-based oxide (e.g., Li(NiₚCo_{q}Mnᵣ)O₂ (where 0<p<1, 0<q<1, 0<r<1, and p+q+r=1) or Li(Niₚ₁Co_{q1}Mnᵣ₁)O₄ (where 0<p1<2, 0<q1<2, 0<r1<2, and p1+q1+r1=2), etc.), or lithium-nickel-cobalt-transition metal(M) oxide (e.g., Li(Niₚ₂Co_{q2}Mnᵣ₂Mₛ₂)O₂ (where M is selected from the group consisting of Al, Fe, V, Cr, Ti, Ta, Mg and Mo, and p2, q2, r2, and s2 are atomic fractions of each independent elements, wherein 0<p2<1, 0<q2<1, 0<r2<1, 0<s2<1, and p2+q2+r2+s2=1), etc.), lithium iron phosphate (e.g., Li₁₊ₐFe₁₋ₓMₓ(PO₄₋₆)X₆ (where M is at least one selected from Al, Mg, and Ti, X is at least one selected from F, S and N, -0.5≤a≤+0.5, 0≤x≤0.5, 0≤b≤0.1), or the like, and any one thereof or a compound of two or more thereof may be used.

The above-mentioned cathode active material may be contained in an amount of 60 to 99 wt.%, or 70 to 99 wt.%, or 80 to 98 wt.%, based on the total weight of the cathode active material layer.

Meanwhile the conductive material contained in the cathode active material layer is a component for further improving the conductivity of the cathode active material. Such a conductive material is not particularly limited as long as it has conductivity without causing any chemical change in the battery, and, for example, a conductive material, comprising: carbon powder such as carbon black, acetylene black, Ketjen black, channel black, furnace black, lamp black, or thermal black; graphite powder such as natural graphite with a well-developed crystal structure, artificial graphite, or graphite; conductive nanomaterials such as carbon nanofibers or carbon nanotubes; fluorinated carbon powder; conductive powder such as aluminum powder, and nickel powder; conductive whiskers such as zinc oxide whiskers and potassium titanate whiskers; conductive metal oxide such as titanium oxide; or conductive materials such polyphenylene derivatives, may be used. Among these, the conductive material comprises conductive nanomaterials such as carbon nanotubes or carbon nanofibers, which can further lower the resistance of the lithium secondary battery and further enhance output characteristics, and the like.

Typically, the conductive material may be contained in an amount of 1 to 20 wt.%, or 1 to 15 wt.%, or 1 to 10 wt.%, based on the total weight of the cathode active material layer.

The binder optionally included in the cathode active material layer is a component that assists in the bonding between the cathode active material and the conductive material and in the bonding to the current collector. Examples of the binder may comprise polyvinylidene fluoride, polyvinyl alcohol, carboxymethylcellulose(CMC), starch, hydroxypropyl cellulose, regenerated cellulose, polyvinylpyrrolidone, polytetrafluoroethylene, polyethylene(PE), polypropylene, ethylene-propylene-diene monomer, sulfonated ethylene-propylene-diene monomer, nitrile-based rubber, styrene-butadiene rubber, fluororubber or the like. Mixtures or copolymers of two or more selected from these may also be used.

Typically, the binder may be included in an amount of 1 to 20 wt.%, or 1 to 15 wt.%, or 1 to 10 wt.%, based on the total weight of the cathode active material layer.

In addition, a filler may be optionally added to the cathode as a component for inhibiting the expansion thereof. Such a filler is not particularly limited as long as it can inhibit the expansion of the electrode without causing any chemical change in the battery, and examples thereof may comprise olefinic polymers such as polyethylene and polypropylene; fibrous materials such as glass fibers and carbon fibers.

The above-mentioned cathode can be produced, for example, by dispersing and mixing the cathode active material, the binder, the conductive material and the like in a dispersion medium (solvent) to form a slurry, and coating the slurry onto a metal current collector, followed by drying and rolling. At this time, the dispersion medium may be NMP(N-methyl-2-pyrrolidone), DMF(dimethyl formamide), DMSO(dimethyl sulfoxide), ethanol, isopropanol, water, or a mixture thereof, but are not necessarily limited thereto.

Meanwhile, the above-mentioned lithium metal secondary battery may further comprise a porous separator interposed between the cathode and the anode.

Such a porous separator can be made of olefinic polymers such as polyethylene(PE) and polypropylene(PP), glass fiber, etc. in the form of a sheet, a multilayer membrane, a microporous film, a woven fabric, and a nonwoven fabric, or the like, but is not necessarily limited thereto. However, it may be preferable to apply porous polyethylene or porous glass fiber non-woven fabric (glass filter) as a separator, and it may be more preferable to apply a porous glass filter (glass fiber non-woven fabric) as a separator. The separator may be an insulating thin film having high ion permeability and mechanical strength, and the pore diameter of the separator may generally range from 0.01 to 10 *µ*m, and the thickness may generally range from 5 to 300 *µ*m, but are not limited thereto.

Meanwhile, the above-mentioned lithium metal secondary battery can be manufactured according to a conventional method in the art. For example, the lithium metal secondary battery can be manufactured by housing an electrode assembly comprising a cathode, an anode, and a separator in a case, and injecting and impregnating the above-mentioned electrolyte in the case.

Such a lithium metal secondary battery can be applied not only to a battery cell used as power sources for small-sized devices, but can also be particularly suitably used as a unit battery in a battery module, which is a power source for medium-sized and large-sized devices. The battery of an embodiment or the other embodiment can be selectively used, taking into consideration an appropriate discharge rate for each application.

Below, embodiments of the present disclosure will be described in detail to the extent that one of ordinary skill in the art can easily practice the present disclosure. The present disclosure may be implemented in various different forms, and is not limited to the embodiments described herein.

### Example 1, Comparative Example 1, and Comparative Example 2: Preparation of electrolyte

A non-aqueous organic solvent of FDMB and an organic non-solvent of BTFE were mixed in a volume ratio of 1:1, and lithium salt(LiFSI) was dissolved at a concentration of 1 M to prepare an electrolyte of Example 1.

In addition, the electrolyte of Comparative Example 1 without using the organic non-solvent (containing only the non-aqueous organic solvent of FDMB), and an electrolyte of Comparative Example 2 (FDMB+TTE) using the organic non-solvent of TTE instead of the BTFE were prepared, respectively.

### Experimental Example 1: Analysis of solvation structure and ionic conductivity of electrolyte

A symmetric cell was fabricated by combining 50 µL of the electrolyte of Example or Comparative Example, 40 *µ*m of a working electrode Li, 150 *µ*m of a counter electrode Li, and a separator PP, and an electrochemical reaction was carried out under a current density of 1 mA/cm² and a capacity of 1 mAh/cm².

During the process, the change in chemical species in the electrolyte was analyzed by NMR, and the solvation structure of the electrolyte was analyzed from the analysis results. The analysis results and a schematic diagram of the solvation structure predicted by such analysis are shown in FIGF. 1.

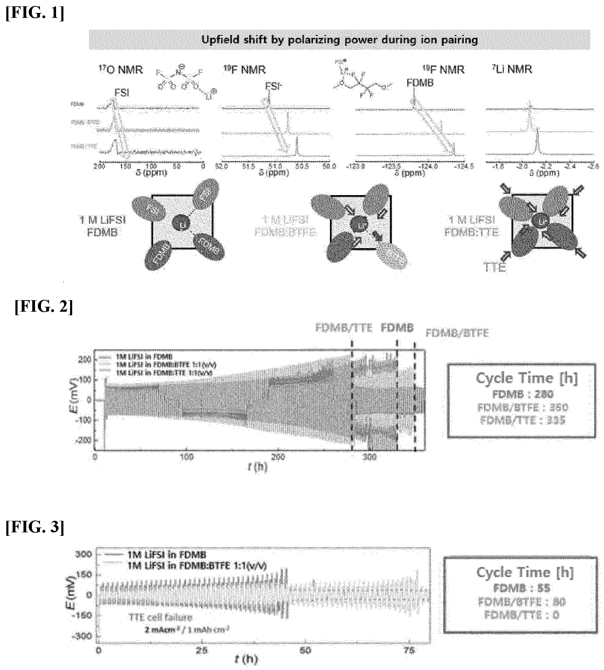

Referring to FIG. 1, in the electrolyte of Example 1, FDMB/BTFE were mixed in a volume ratio of 1:1, thereby increasing the ion pairing of Li and FSI anions compared to Comparative Example 1 which used FDMB alone, and this was predicted to affect effective interface formation. Furthermore, BTFE participates in the solvation structure, while TTE does not participate. This shows that Example 1, in which BTFE was added, had improved ionic conductivity as compared to Comparative Example 2, in which TTE was added.

To confirm this more clearly, the ionic conductivity was measured in the symmetric cell, and is shown in Table 1 below.

**[Table 1]**

| Sample | Ionic conductivity σᵢₒₙ [mS cm⁻¹] | Overvoltage η [mV] | Cycles [number] |
|---|---|---|---|
| Comparative Example 1(FDMB) | 0.41 | 127.7 | 162 |
| Example 1 (FDMB:BTFE 1:1(v/v)) | 0.46 | 86.0 | 175 |
| Comparative Example 2 (FDMB:TTE 1:1 (v/v)) | 0.24 | 132.3 | 145 |

Referring to Table 1, when the electrolyte of Example 1 was used, higher ion conductivity and lower overvoltage were observed as compared to Comparative Examples 1 and 2, and thus, the cell lifetime was improved.

### Experimental Example 2: Evaluation of lifetime characteristics

The lithium symmetric cell used in Experimental Example 1 was used in the same manner to evaluate the lifetime characteristics when the electrolytes of Example and Comparative Example were used, and the evaluation results are shown in FIG. 2. At this time, the current density applied to the symmetric cell was 1 mA/cm², and the capacity was 1 mAh/cm².

In addition, the current density applied to each symmetric cell was increased to 2 mA/cm², and the lifetime characteristics were evaluated by the same method. The evaluation results are shown in FIG. 3.

Referring to FIGS. 2 and 3, it was observed that when the electrolyte of Example 1 was used, the lifetime of the lithium symmetric cell was enhanced and the overvoltage was improved, confirming that it contributed to the formation of a more effective interface in lithium ion transfer.

### Experimental Example 3: Evaluation of lithium corrosivity

A symmetric cell was fabricated by combining 50 µL of the electrolyte of Example or Comparative Example, 150 *µ*m of a working electrode Li, 150 *µ*m of a counter electrode Li, and a separator PP.

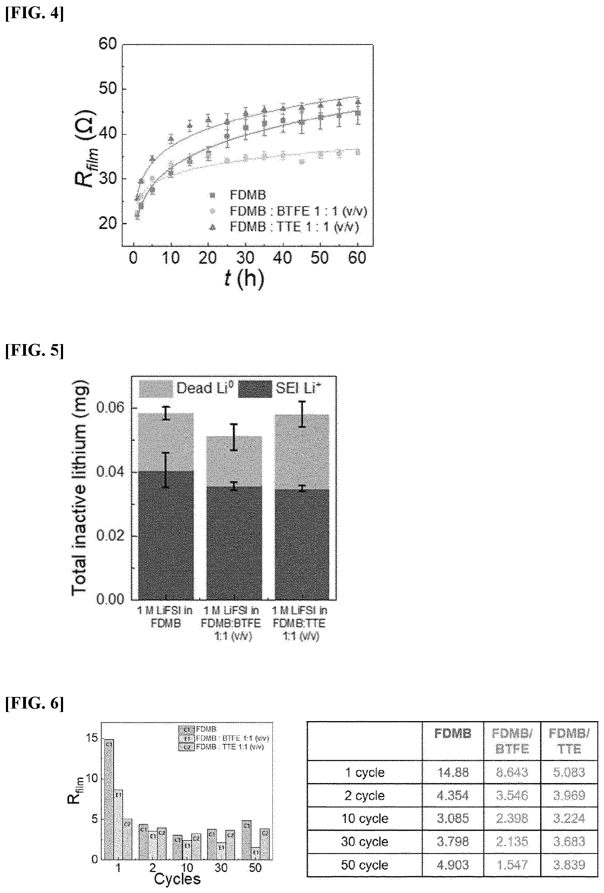

The SEI film interfacial resistance of the fabricated symmetric cell was measured using an EIS (Electroscopy Impedance Spectroscopy) analysis method at room temperature (25°C) for 1 hour, 2 hours, 5 hours, and then then at 5-hour intervals up to 60 hours, and the results are shown in FIG. 4.

Referring to FIG. 4, it was confirmed that when the electrolyte of Example 1 was used, the resistance of the SEI film became the lowest with the passage of time. This is because when the electrolyte of Example 1 was used, an SEI film that protects the surface of lithium well was formed to suppress additional reactions between the electrolyte and lithium, and accordingly, the corrosion amount of lithium is also predicted to be the lowest.

### Experimental Example 4: Measurement of the amount of inactivated lithium

A symmetric cell was fabricated by combining 50 µL of the electrolyte of Example or Comparative Example, 150 *µ*m of a working electrode Li, 150 *µ*m of a counter electrode Cu, and a separator PP.

The fabricated symmetric cell was subjected to ten charge/discharge cycles. The symmetric cell subjected to ten cycles was disassembled, the resulting Cu electrode was placed in a vial, water was injected thereto, and the amount of H₂ generated was measured in relation to the Li on the surface of the Cu electrode, and the amount of inactivated lithium was calculated. The measured amount of lithium is shown in FIG. 5. To calculate the amount of inactivated lithium, the following Reaction Equation was used.

[Reaction Equation: 2Li + 2H₂O → H₂ + 2LiOH]

Referring to FIG. 5, it can be confirmed that the smallest amount of inactivated lithium was generated when the electrolyte of Example 1 was used. This is interpreted as being because the electrolyte of the present disclosure has fast ion conductivity, enabling uniform lithium deposition/desorption.

### Experimental Example 5: SEI film thickness, resistance evaluation, and component analysis

The resistance of the SEI film formed on the anode was evaluated while performing charge/discharge cycles for the lithium symmetric cell used in Experimental Example 1, and the evaluation results are shown in FIG. 6. The table described in FIG. 6 shows the resistance values of the SEI film according to the charge/discharge cycles of Example and Comparative Example. Referring to FIG. 6, it was confirmed that the SEI film resistance after 50 cycles in Example 1 was the lowest.

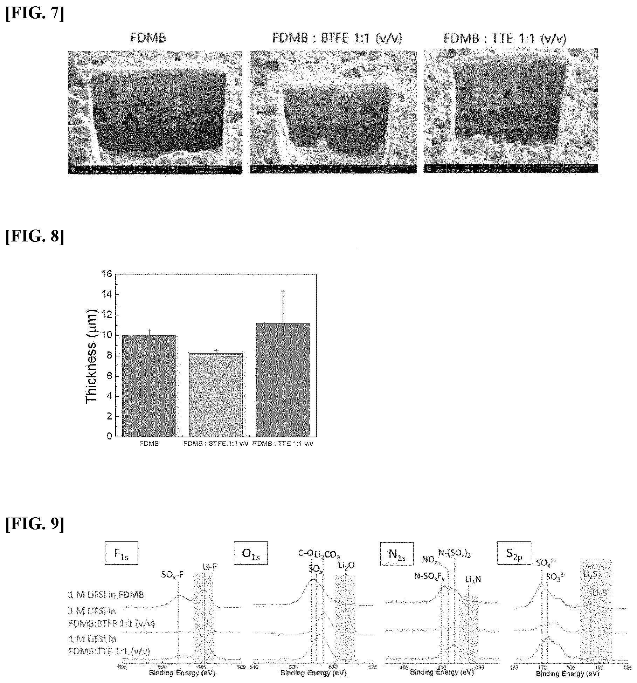

In addition, after the 50 cycles, each SEI film was analyzed using an electron microscope and shown in FIG. 7, and the thickness of the SEI film measured therefrom is shown in FIG. 8.

Referring to FIGS. 7 and 8, it was confirmed that the thickness of the SEI film was the thinnest when the electrolyte of Example 1 was used.

Further, after 50 cycles, the component analysis of the SEI film was performed using XPS (X-ray Photoelectron Spectroscopy), and the results are shown in FIG. 9. From FIG. 9, it can be confirmed that when the electrolyte of Example 1 was used, the SEI film contains a large amount of inorganic components (Li₂O, Li₃N, Li₂S, Li₂S₂). The SEI film containing a large amount of these inorganic components favorably protects the surface of lithium and enables uniform deposition/desorption of lithium.

From the resistance evaluation results, SEI film thickness evaluation results, and SEI film component analysis results, it can be predicted that the overvoltage is hardly generated in Example 1.

### Experimental Example 6: Evaluation of oxidation stability and cycle characteristics

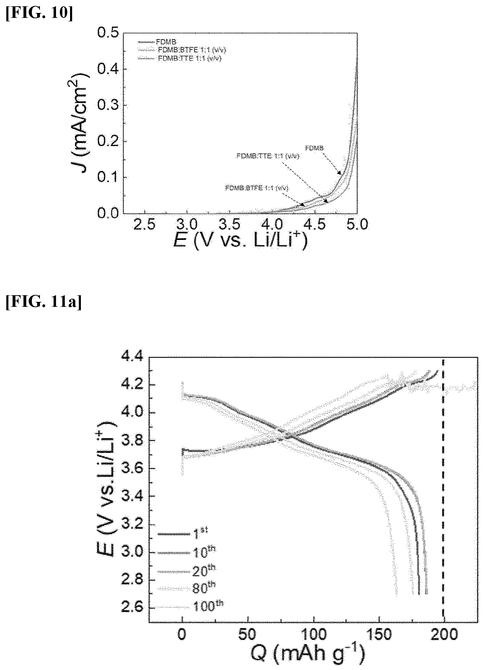

An evaluation cell was fabricated by combining 75 µL of the electrolyte of Example or Comparative Example, a working electrode carbon, 150 *µ*m of a counter electrode Li, and a separator PP, and the oxidation stability of each electrolyte was evaluated and shown in FIG. 10.

Referring to FIG. 10, when the electrolyte of Example 1 was used, a higher oxidation potential was expressed than that of Comparative Example 1, similarly to that of Comparative Example 2, and from this, it was confirmed that the electrolyte of the Example exhibited high oxidation stability and enabled the use of a high-voltage cathode.

On the other hand, a full cell was fabricated by combining 200 µL of the electrolyte of Example or Comparative Example, a cathode material NCM811 (LiNi_{0·8}Co_{0·1}Mn_{0·1}O₂), an anode lithium metal layer Li 150 µm, and a separator PP, and after activation for 2 cycles at 0.1C, charge and discharge were performed at a rate of 0.33 C.

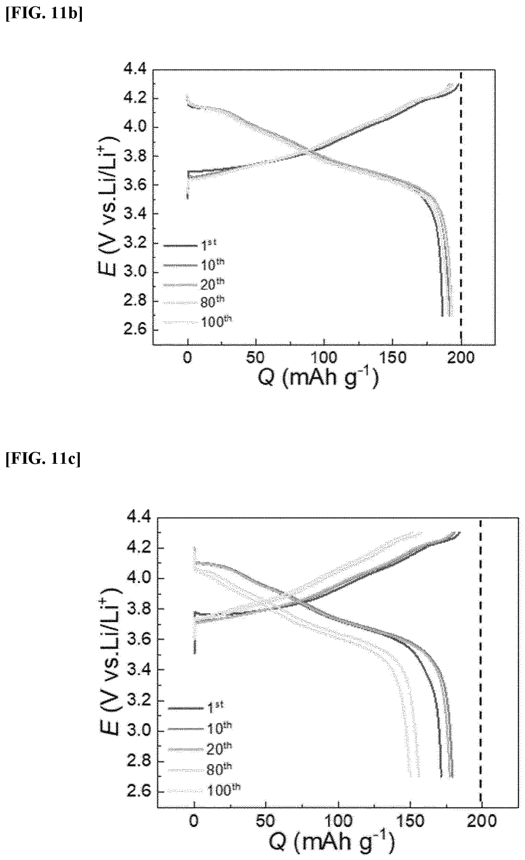

Based on the results of these charge and discharge tests, the cycle characteristics of Comparative Example 1 (FIG. 11a), Example 1 (FIG. 11b), and Comparative Example 2 (FIG. 11c) were evaluated, and the results are shown in FIGS. 10a ~10c, respectively.

Through this, it was confirmed that the capacity reduction was the lowest when Example 1 was used.

### Experimental Example 7: Evaluation of CEI film thickness and crack occurrence in cathode particles

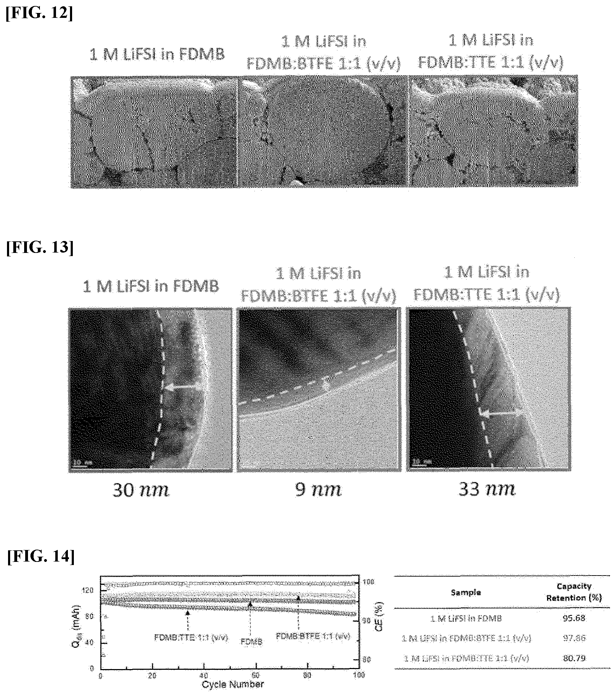

The full cell fabricated in Experimental Example 6 was subjected to 20 charge/discharge cycles, and the cross section of the cathode obtained by disassembling the cell and the CEI film were analyzed by an electron microscope (SEM, TEM). The results are shown in FIGS. 12 and 13, respectively.

From Fig. 12, it can be confirmed that the smallest amount of cracks occurred when the electrolyte of Example 1 was used, and this is predicted that electrodeposition/desorption reactions occurred uniformly due to rapid movement of lithium ions in the cathode, and thus the occurrence of cracks due to volume shrinkage/expansion is small.

In addition, it can be confirmed from FIG. 13 that the thickness of the CEI film became the thinnest when the electrolyte of Example 1 was used. This is predicted be because the amount of side reactions occurring from the cracks is small.

### Experimental Example 8: Evaluation of pouch cell performance

A bi-cell was fabricated by combining a cathode material NCM811 (LiNi_{0·8}Co_{0·1}Mn_{0·1}O₂), Li 40 µm, and a separator PP, and then the electrode assembly was housed in a pouch-type case and filled with the electrolyte of Example or Comparative Example to fabricate a pouch cell (areal capacity of NCM811 3.8 mAhcm⁻², anode capacity/cathode capacity ratio (N/P) 2.16, electrolyte/anode capacity ratio (E/C) 2.5 g Ah⁻¹). The fabricated pouch cell was charged/discharged at 3.0-4.3V 0.1C/0.5C, and from the results of the charge and discharge test, the cycle characteristics of Example 1, Comparative Example 1 and Comparative Example 2 were evaluated, and the results are shown in FIG. 14.

Throughout all of this, it was confirmed that when the electrolyte of Example 1 was used, a high discharge capacity was maintained for 100 cycles and the highest capacity retention rate was achieved. This is predicted to be because the electrolyte of Example 1 has high ionic conductivity, forms structurally/chemically stable SEI and CEI to suppress unnecessary side reactions, and hardly exhibits overvoltage.

### Experimental Example 9: Evaluation of cycle characteristics

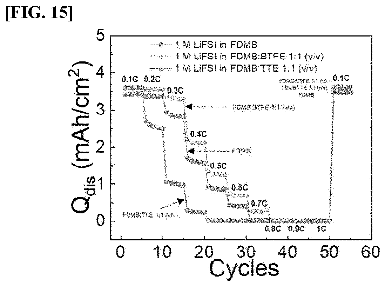

A full cell was fabricated in the same manner as in Experimental Example 6, except that LFP (LiFePO₄) was used as the cathode material in Experimental Example 6, and the cycle characteristic evaluation was conducted, and the results are shown in FIG. 15.

Referring to FIG. 15, it can be confirmed that when the discharge capacity was measured while increasing the cell operation speed for 55 cycles, the electrolyte of Example 1 showed the highest discharge capacity at all speeds. Throughout all of this, it can be confirmed that the performance of the battery using the electrolyte of Example 1 is the most excellent even when the type of cathode materials was changed.

## Claims

1. An electrolyte for lithium secondary battery comprising:
a lithium salt;
a non-aqueous organic solvent comprising a fluorine-substituted ether-based solvent; and
an organic non-solvent exhibiting a solubility of the lithium salt that is at least 10 times lower than that of the non-aqueous organic solvent,
wherein the organic non-solvent comprises a compound represented by the following Chemical Formula 1: 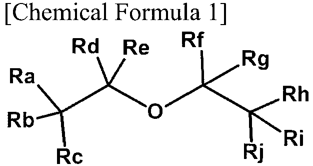 wherein in Chemical Formula 1,
Ra to Rj are the same or different from each other, and each independently represent hydrogen or a fluoro group, and at least five of the Ra to Rj are fluoro groups.

2. The electrolyte for lithium secondary battery according to claim 1, wherein the lithium salt comprises at least one selected from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiFSI (Lithium bis(fluorosulfonyl) imide, LiN(SO₂F)₂), LiBETI (lithium bis(perfluoroethanesulfonyl) imide, LiN(SO₂CF₂CF₃)₂) and LiTFSI (lithium bis(trifluoromethanesulfonyl) imide, LiN(SO₂CF₃)₂).

3. The electrolyte for lithium secondary battery according to claim 1, wherein the lithium salt is contained in the electrolyte at a concentration of 1.0 to 2.5 M.

4. The electrolyte for lithium secondary battery according to claim 1, wherein the fluorine-substituted ether-based solvent comprises 2,2,3,3-tetrafluoro-1,4-dimethoxybutane(FDMB) or 2,2,3,3-tetrafluoro-1,4-diethoxybutane(FDEB).

5. The electrolyte for lithium secondary battery according to claim 1, wherein five or six of Ra to Rj are fluoro groups, and the rest are hydrogen.

6. The electrolyte for lithium secondary battery according to claim 1, wherein the compound represented by Chemical Formula 1 is bis(2,2,2-trifluoroethyl)ether(BTFE).

7. The electrolyte for lithium secondary battery according to claim 1, wherein the organic non-solvent: the non-aqueous organic solvent is included in a volume ratio of 1:0.5 to 1:1.5.

8. A lithium secondary battery comprising:
a cathode containing a cathode active material;
an anode;
a separator between the cathode and the anode; and
an electrolyte according to any one of claims 1 to 7.

9. The lithium secondary battery according to claim 8, wherein the cathode active material comprises lithium; and a lithium transition metal oxide comprising at least one transition metal selected from the group consisting of nickel, manganese, cobalt and iron.

10. The lithium secondary battery according to claim 8, wherein the anode comprises a lithium metal layer.
